# EUROPEAN PATENT SPECIFICATION

(11) **EP 1 933 654 B1**
(45) Date of publication and mention of the grant of the patent: **17.03.2010**
(21) Application number: 06842326.8
(22) Date of filing: 04.10.2006
(51) Int. Cl.: A24D 3/04

(54) **CIGARETTES HAVING HOLLOW FIBERS**
ZIGARETTEN MIT HOHLFASERN
CIGARETTES POSSEDANT DES FIBRES CREUSES

(30) Priority: 04.10.2005 US 241978
(43) Date of publication of application: 25.06.2008
(73) Proprietor: Philip Morris Products S.A., 2000 Neuchâtel (CH)
(72) Inventor: RASOULI, Firooz, Midlothian, Virgina 23113 (US); HEARN, John, Midlothian, Virgina 23112 (US); LI, Ping, Glen Allen, Virgina 23059 (US)
(74) Representative: Millburn, Julie Elizabeth
(86) International application number: PCT/IB2006/003884
(87) International publication number: WO 2007/054826

(56) References cited:
- EP-A- 0 204 512
- WO-A-01/80671
- DE-U- 1 903 934
- US-A- 4 821 750

## Description

### BACKGROUND

A wide variety of materials have been suggested in the art as filters for tobacco smoke. Such filter materials include cotton, paper, cellulose, and certain synthetic fibers. These filter materials are known to remove particulates and condensable components from tobacco smoke. They have little or no effect in removing certain gaseous components, e.g., aldehydes, from tobacco smoke. See for example commonly assigned U.S. Patent No. 6,209,547 see also EP 0204512.

### SUMMARY

Smoking articles, such as cigarettes and cigarette filters, and methods of manufacturing smoking articles are provided. In one exemplary embodiment, a smoking article contains hollow fibers which affect mainstream tobacco smoke drawn through the smoking article.

In another exemplary embodiment, a cigarette, comprising: a tobacco rod; a filter joined to the tobacco rod, wherein the filter comprises a bundle of hollow fibers, wherein the lumens of the hollow fibers are aligned axially in parallel to one another; and an additive material in extra-cellular spaces of the hollow fibers, wherein one end of at least one of the hollow fibers is obstructed is provided.

Preferably, the hollow fibers comprise a polymeric material.

Preferably, the cigarette further comprises a sorbent. Preferably, the sorbent is located upstream in the filter from the hollow fibers.

Preferably, the lumens of the hollow fibers are aligned with one another in a direction in which smoke will travel through the cigarette.

In another exemplary embodiment, a cigarette filter, comprising: hollow fibers; an outer layer covering an outer region of the hollow fibers; and cellulose acetate, wherein the hollow fibers and the outer layer are embedded within the cellulose acetate is provided.

In another exemplary embodiment, a method of manufacturing a cigarette filter, comprising: preparing hollow fibers with a smoke impermeable material covering one end of at least one of the hollow fibers; at least partially filling extra-cellular spaces within the hollow fibers with an additive material; and placing the hollow fibers with the smoke impermeable material and the additive material in a cigarette filter is provided.

Preferably, at least partially filling the extra-cellular spaces within the hollow fibers with the additive material comprises soaking the hollow fibers in the additive material for a time effective to at least partially fill the extra-cellular spaces with the additive material.

Also provided is a method of treating mainstream smoke, comprising: drawing tobacco smoke axially through hollow fibers, wherein the mainstream tobacco smoke is drawn into an open upstream end into lumens of the hollow fibers and is drawn through permeable walls of the hollow fibers to a downstream end of a smoking article.

Also provided is a cigarette filter, comprising: a hollow fiber membrane, wherein the hollow fiber membrane comprises: hollow fibers; and a smoke impermeable material, wherein the smoke impermeable material obstructs a downstream end of a lumen of the hollow fiber.

Preferably, the cigarette filter further comprises an additive material in extra-cellular spaces of the hollow fibers. The additive material may comprise a flavorant, a reagent which chemically reacts with and selectively separates a gaseous component of a smoke stream, a surfactant, a solvent, or mixtures thereof.

### BRIEF DESCRIPTION OF THE DRAWING FIGURES

Figure 1 illustrates an exemplary embodiment cigarette including a hollow fiber membrane containing filter, and a path of fluid flow through the cigarette;
Figure 2 illustrates a cross-section of a bundle of aligned hollow fibers with open upstream ends and impermeable or semi-permeable material filling gaps between the hollow fibers;
Figure 3 illustrates a cross-section of a bundle of aligned hollow fibers with closed downstream ends and permeable material filling gaps between the hollow fibers;
Figure 4 illustrates another exemplary embodiment cigarette including a hollow fiber membrane containing filter, and a path of fluid flow through the cigarette;
Figure 5 is an exemplary illustration of a cross-section of a hollow fiber;
Figure 6 is photomicrograph of extra-cellular spaces of an exemplary hollow fiber; and
Figure 7 illustrates an exemplary embodiment cigarette including a hollow fiber membrane and a sorbent in a filter, and a path of fluid flow through the cigarette.

### DETAILED DESCRIPTION

Smoking articles are provided that include hollow fibers therein, wherein the hollow fibers are obstructed on one end to force a fluid through the walls of the hollow fibers.

As used herein, the term "feed" is used to indicate a material or fluid which is fed into the hollow fibers. Also as used herein, the term "retentate" is used to indicate the portion of the feed which does not pass through the walls of the hollow fibers and is trapped within or on an outer surface of the lumens of the hollow fibers. Additionally, the term "filtrate" is used to indicate the portion of the feed which passes through the walls of the hollow fibers.

The term "obstruct" is intended to include blocking, partial blocking, filtering, or any other means of reducing flow through an area. For example, an impermeable or semi-permeable material can be used to obstruct the downstream end of the hollow fibers by blocking filtrate or feed from passing through a downstream end of the hollow fibers, or by merely increasing the resistance to flow for filtrate or feed passing through the downstream end of the hollow fibers.

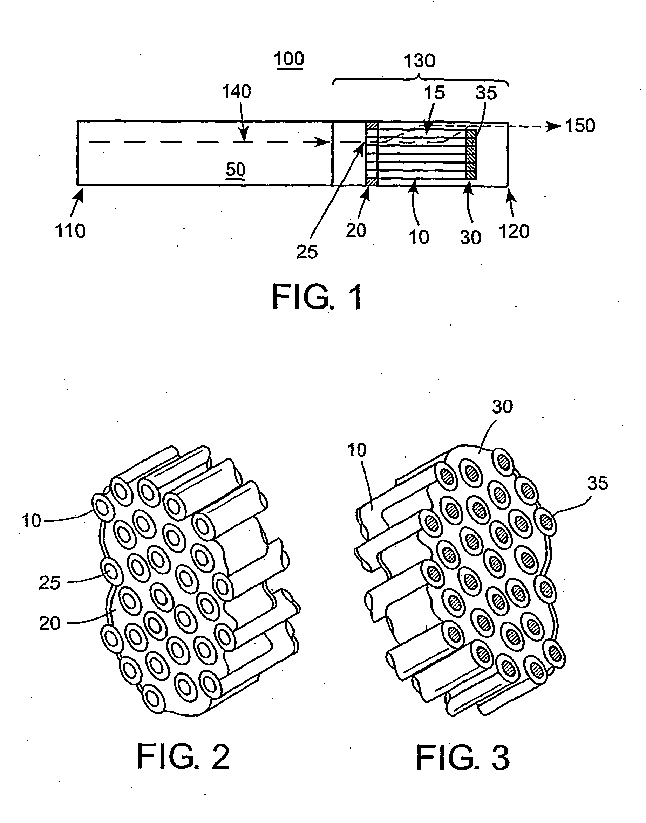

An exemplary use of a cigarette 100 with hollow fibers is illustrated in Figure 1, wherein the hollow fibers are utilized as hollow fiber membranes. As illustrated in Figure 1, upon lighting a cigarette 100 at an upstream end 110 of the cigarette 100 and applying a drawing action to the downstream end 120, a smoke feed 140 (a flow of mainstream tobacco smoke) would travel in a downstream direction. The smoke feed 140 would pass from the upstream end 110 through a tobacco rod 50, then through a filter section 130, then through the downstream end 120 of the cigarette 100.

Upon entry into the filter section 130, the smoke feed 140 is forced into lumens, or inner diameters, 15 of hollow fibers 10 within the filter section 130. In Figure 1, the lumens 15 are unobstructed on the upstream ends 25 of the hollow fibers 10, but obstructed on the downstream ends 35. The smoke feed 140 passing into the filter is directed into the upstream ends 25 of the lumens 10 by a first filtrate obstructing or smoke impermeable material 20 (hereinafter "smoke impermeable material" generally), which obstructs smoke feed 140 flow between the outer circumference of the bundle of fibers 10 and the inner diameter of the cigarette, as illustrated in Figure 1.

Additionally, the first smoke impermeable material 20 can also be provided between the individual fibers 10 in the bundle, as illustrated in Figure 2, to obstruct fluid flow between the fibers 10 in the bundle. An exemplary cross-section illustration of the first smoke impermeable material 20 surrounding the hollow fibers 10 in the bundle, while not obstructing the upstream end 25 of the lumens 15, is illustrated in Figure 2.

Next, also as illustrated in Figure 1, the smoke feed 140 is forced from the lumens 15 through the walls of the hollow fibers 10 by a second smoke impermeable material, which obstructs the downstream ends 35 of lumens 15 of the hollow fibers 10. Figure 3 is an exemplary cross-section illustration of the second smoke impermeable material obstructing the downstream ends 35 of the lumens 15 of the hollow fibers 10.

It is noted that as illustrated in Figure 3, the downstream ends 35 of the hollow fibers 10 can include a filtrate permeable material 30 between the hollow fibers 10, as well as between the outer circumference of the bundle of fibers 10 and the inner diameter of the cigarette filter 130, if desired. As provided herein, the filtrate permeable material 30 can be any material that allows filtrate to pass through the filtrate permeable material 30 for ejection out of the downstream end 120 of the cigarette 100.

The filtrate permeable material 30 can be provided to hold the hollow fibers 10 in place in relation to one another, as well as in relation to the filter 130. Alternatively, a ring, an adhesive, or other physically containing material can be used, as long as it does not substantially obstruct filtrate flow through the filter 130. An exemplary embodiment of the filtrate permeable material 30 is a porous, filtrate permeable material, such as cellulose acetate.

By obstructing the downstream ends 35 of the hollow fibers 10, smoke 140 is forced through the walls of the hollow fibers 10 because of the pressure exerted by the smoker on the downstream end 120. By forcing smoke 140 through the hollow fibers 10, the walls of the hollow fibers 10 can be used to filter smoke 140 therethrough. Thus, the walls of the hollow fibers 10 behave as a membrane in that the walls of the hollow fibers 10 allow the filtrate 150 from the smoke 140 to pass, while the retentate (not shown) is trapped within the lumens 15.

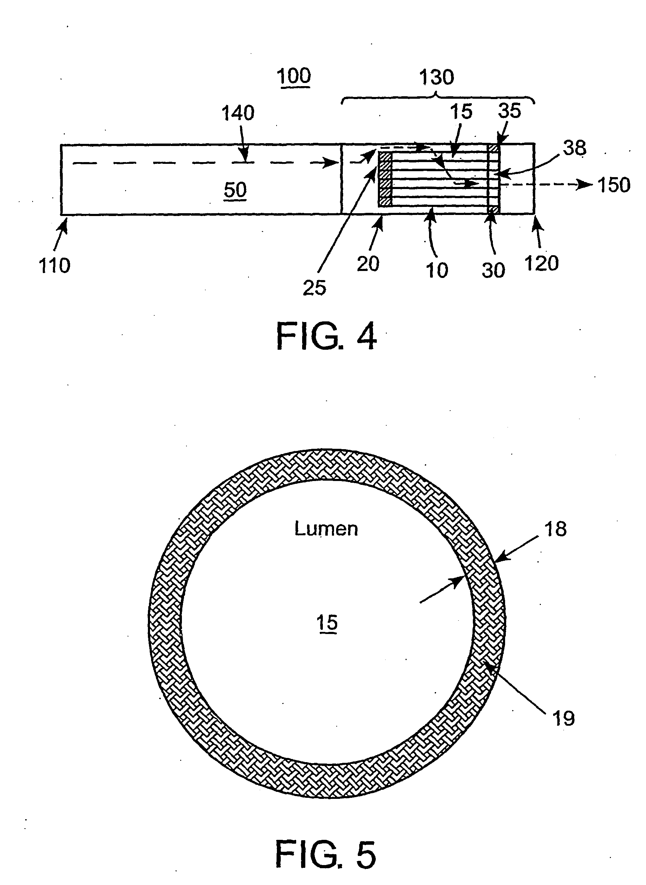

It is noted that in another exemplary embodiment, illustrated in Figure 4, which is similar to Figure 1, the filter 130 can be reversed. In other words, the first smoke impermeable material 20 can be formed to obstruct an upstream end 25 of the lumens 15 so as to not allow smoke to enter the lumens 15 on the upstream end 25 of the hollow fibers 10. It is noted that the first smoke impermeable material 20 in Figure 4 is formed in a similar fashion to the second smoke impermeable material 35 illustrated in Figure 3, wherein the first impermeable material is formed within the lumens 15 of the upstream end 25 of the hollow fibers. Additionally, similar to Figure 3, a filtrate permeable material 30 can also be provided between hollow fibers 10 for the same reasons as discussed above with respect to Figure 3.

Additionally, as also illustrated in Figure 4, a second smoke impermeable material 30 can be used to obstruct fluid flow between the outer circumference of the bundle of hollow fibers 10 and the inner diameter of the cigarette filter 130, as well as between the hollow fibers 10, similar to the first smoke impermeable material 20 of the embodiment illustrated in Figure 1.

By providing the two smoke impermeable materials 20, 30, smoke feed 140 can be routed between an outer circumference of the bundle of fibers 10 and the inner diameter of the cigarette filter 130 at an upstream end 25, through the walls of the hollow fibers 10 and out the downstream end 35. By passing the smoke filtrate 150 through the walls of the hollow fibers 10, the hollow fibers 10 behave as a hollow fiber membrane in that the smoke is separated into retentate and filtrate 150, wherein the retentate (not shown) can be trapped on the outer surfaces of the hollow fibers 10. After passing through the walls of the hollow fibers 10, the filtrate 150 can then be passed through the downstream end 35 of the hollow fibers 10.

The hollow fibers 10 used herein are preferably embodied, as illustrated in Figure 5, by porous or semi-porous fibers 10 with lumens 15 (hollow inner diameters) with a wall 18 thickness with at least some porosity 19. The hollow fibers can be made of any porous or semi-porous material, wherein the porosity levels can be tailored to provide predetermined levels of permeability and also to contain extra-cellular spaces therein. For example, hollow fibers can be made of polymers. Preferably, the hollow fibers comprise cellulose, modified cellulose, cellulose acetate, polypropylene, polysulfone, acrylic compounds, silicone rubber or mixtures or combinations thereof. Further discussion of hollow fiber materials can be found in U.S. Patent No. 3,708,071.

It is noted that the material used for the hollow fibers 10 can be chosen to have a predetermined pore size by determining the materials used for the walls. For example, if the hollow fibers 10 are made of larger pore materials, larger constituent filtrates are allowed to pass through. Thus, the material used for the hollow fibers 10 can be chosen to selectively restrain passage to only certain ranges of filtrates, if desired.

In a preferred smoking article, hollow fibers 10 are oriented in a direction in which smoke will travel through the smoking article. By providing such alignment, smoke can travel through lumens of the hollow fibers in a direction approximately parallel to the suction or vacuum force applied at the downstream end of the smoking article drawing smoke from the upstream or lit end.

Additionally, the hollow fibers 10 are approximately parallel to one another in order to allow smoke feed 140 to evenly penetrate the hollow fibers 10, pass through the walls of the hollow fibers evenly, and for fitting bundles of hollow fibers into the axis of a cigarette. For example, as illustrated in Figure 1, the axes of the lumens 15 are preferably aligned parallel to one another (as well as parallel to the axis of the cigarette), wherein such alignment allows smoke feed 140 to flow through the multiple lumens directly (i.e., without detour or indirect routing) while smoking of the cigarette.

These hollow fibers 10 can be used within any smoking article, like a traditional or non-traditional cigarette, e.g., in a cigarette filter. Preferred embodiments provide hollow fibers for use in smoking articles, such as cigarettes and non-traditional cigarettes. Non-traditional cigarettes include, by way of example, cigarettes for electrical smoking systems as described in commonly-assigned U.S. Patent Nos. 6,026,820; 5,988,176; 5,915,387; 5,692,526; 5,692,525; 5, 666, 976; and 5, 499, 636.

Hollow fibers are preferably sized to a length less than the length of a filter so that the entire length of the fiber can fit within the area of the filter as the hollow fibers are aligned in the direction of smoke flow. Also, the diameters of the lumens of the hollow fibers (in combination with the material used to make the hollow fibers and the density of any bundle of hollow fibers) control the amount of flow possible, as well as the force required to pull the tobacco smoke through the hollow fibers (hereinafter, resistance to draw (RTD)).

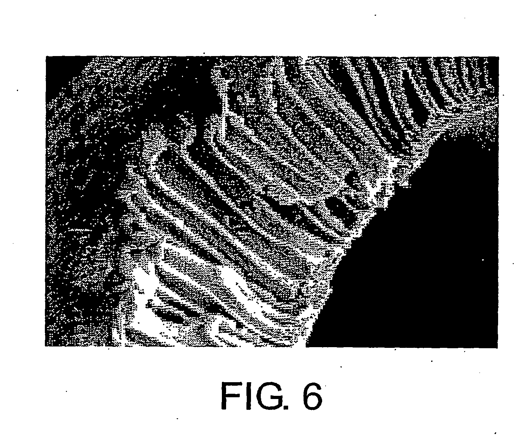

In addition to using hollow fibers as hollow fiber membranes to filter materials, such as smoke, therethrough, the hollow fibers can also be used to provide additives. For example, as illustrated in Figure 6, hollow fibers can include porosities (i.e., extra-cellular spaces) in the walls of the hollow fibers. Within these extra-cellular spaces, additive materials can be stored, wherein the additive materials can be contacted by fluids, such as smoke, passing through the walls of the hollow fibers and thus through the extra-cellular spaces.

The outer diameter and wall thickness of the hollow fibers are preferably sized to optimize the hollow fibers' ability to hold additive materials and to control filtrate flow through the walls and retentate trapping on the walls. It is noted that additive materials tend not to be absorbed in the lumen of the hollow fibers due to capillary forces, thus the holding of additive materials is primarily carried out by the extra-cellular spaces within the walls. As the outer diameter of the hollow fibers increases, and/or the number of hollow fibers provided increases, the amount of the porous spaces within walls of a hollow fiber (i.e., extra-cellular spaces, such as crack or crevices in walls of hollow fibers) would tend to increase. By increasing the amount of extra-cellular spaces, more additive materials can be absorbed. On the other hand, narrower lumens, and/or fewer hollow fibers can cause the hollow fibers to hold less additive materials due to their lesser total outer surface wall areas.

Preferred embodiment hollow fibers 10 are used to releasably hold additive materials within the extra-cellular spaces of the hollow fibers 10. Thus, because of the releasable hold, additive materials in the hollow fibers 10 can be sufficiently contained to substantially avoid or minimize unwanted migration of the additive materials, such as, for example, during storage of the smoking articles with the additive materials therein.

In order to provide additive materials in hollow fibers, the additive materials are provided for absorption or adsorption within the extra-cellular spaces of the hollow fibers 10. For example, additive materials can be provided by soaking the hollow fibers 10 in a bath of additive materials, wherein the additive material can be absorbed into the extra-cellular spaces.

Therefore, in an average sized cigarette (e.g., a cigarette with a length between 65-100 mm, a diameter of 6-9 mm and a filter length of 15-30 mm), the hollow fibers can have a lumen (i.e., inner) diameter of approximately 50 microns to approximately 1500 microns (e.g., 50-100, 100-150, 150-250, 350-500, 500-1000, or 1000-1500 microns), preferably approximately 90 microns to approximately 450 microns. Additionally, the hollow fibers can have a highly porous wall with a thickness of approximately 10 microns to 100 microns, preferably approximately 10 to approximately 50 microns, and an outer diameter of approximately 100 microns to approximately 2100 microns, preferably 100 to approximately 500 microns.

For example, an exemplary embodiment cigarette can be designed to include a bundle of 10 to 15 hollow fibers, wherein each hollow fiber has a lumen diameter of approximately 200 microns, a wall thickness of approximately 50 microns with an outer diameter of approximately 350 microns.

Hollow fibers can be made by spinning or other fiber making techniques. For example, methods of making hollow fibers have been described in U.S. Patent Nos. 2,999,296 and 4,234,431.

In order to use the hollow fibers 10 in a smoking article, the hollow fibers 10 are cut or otherwise made to a specific length. The hollow fibers 10 can preferably be used in a circumferentially spaced relation in a filter section of a smoking article or can be gathered into a bundle prior to insertion into a final product. If the hollow fibers are bundled, the hollow fibers 10 can be held together using a permeable, semi-permeable or impermeable material, as mentioned above, an enclosure, such as a ring, or an adhesive, such as triacetin, epoxy, and silicone rubber.

Additionally, because of the releasable hold, the additive materials are preferably mobile enough within the extra-cellular spaces of the hollow fibers to be released therefrom upon demand. For example, the additive material can preferably be released from the hollow fibers upon application of a vacuum force or drawing action as mentioned above.

Hollow fibers 10 can also be incorporated into a cigarette filter to provide a means for controlling a resistance to draw (RTD) in a cigarette. In a preferred embodiment, a cigarette filter would include hollow fibers 10 therein. By providing hollow fibers in a cigarette, a cigarette can be provided with as little or as much resistance to draw as desired.

Additionally, hollow fibers 10 can be used to supplement or replace multi-section filter assemblies, which are often more difficult to manufacture than hollow fibers 10. Thus, hollow fibers 10 in cigarette filters could be used to simplify the manufacturing process while still providing tailored levels of RTD.

### 2. Potting Materials

As mentioned above, first and second filtrate obstructing or smoke impermeable materials can be used to obstruct smoke flow through a smoking article as illustrated in Figures 1 and 4. These filtrate obstructing or smoke impermeable materials along with semi-permeable or permeable material used to hold the hollow fibers can be generally referred to as "potting material."

As used herein, "potting material" is intended to include materials that can be used to hold hollow fibers in place, as well as materials that can direct feed, filtrate, and retentate flow in, around and through lumens of the hollow fibers. As such, the potting material can be made of any non-toxic, permeable, semi-permeable or impermeable material that can hold the hollow fibers in a fixed positional relationship with one another (i.e., in parallel to one another). Further discussion of hollow fiber membranes in potting material can be found in U.S. Patent Nos. 3,228,877, 3,528,553 and 6,685,832.

Preferably, the potting material is a polymer or a composite, wherein the material can be selected depending upon the degree of permeability desired. For potting material used to obstruct airflow through an end of a hollow fiber, a filtrate impermeable or semi-permeable potting material may be desired. For example, epoxy is a filtrate impermeable potting material. On the other hand, for potting material used to hold the fibers in place, wherein filtrate obstruction is not desired, a permeable potting material may be desired. For example, cellulose acetate is a permeable potting material.

The potting material can be formed on any portion of the hollow fibers 10. For example, the potting material can be formed on a portion or the entirety of the length, the circumference of the fibers, and/or on ends of the hollow fibers. However, if the potting material is chosen to obstruct airflow, the potting material is preferably formed on less than the entire surface of the hollow fibers, as to allow for at least some filtrate to pass through walls 18 of the hollow fibers 10.

Additionally, less than full coverage of the walls 18 of the hollow fibers 10 can be desired to not completely enclose and possibly isolate the extra-cellular spaces and additive materials that can be contained therein. As such, coverage by the potting material on the hollow fibers 10 is preferably less than 90% of the wall surface of the hollow fibers 10, and even more preferably, less than 60% of the wall surface of the hollow fibers 10 (e.g., 100-90%, 90-80%, 80-70%, 70-60%, 60-50%, 50-40%, 40-30%, 30-20%, 20-10% or 10-0%).

The potting material can be formed on the hollow fibers in any manner that provides the airflow controlling properties desired by the embodiment. For example, methods of forming potting material on hollow fibers have been discussed in U.S. Patent Nos. 6,702,561, 6,663,745, 6, 623, 637 and 5,480,553.

As mentioned above, the potting material can be made of any material that can obstruct smoke passage. As such, the potting material can be made of an impermeable, semi-permeable or permeable material. If the potting material is a semi-permeable or permeable material, then the potting material can be used as permeable barrier and can increase the resistance to airflow therethrough.

Therefore, a smoking article can be provided with hollow fibers in a conformation such that the structure and orientation for the hollow fibers 10 allows for at least some of the extra-cellular spaces of hollow fibers 10 to be accessible to hollow fibers. Additionally, as provided herein, the smoke flow can still be at least partially directed through the lumens 15 and the walls 18 of the hollow fibers 10, wherein additive materials in the extra-cellular spaces can interact with the airflow as it passes through the walls 18 of the hollow fibers 10.

### 3. Outer Layer

The hollow fibers 10 can also include an outer layer covering or encapsulating the hollow fibers 10 (with additive material therein, if desired). Preferably, the outer layer is a solid wall or film, wherein the solid wall or film can be used to temporarily seal or encapsulate the hollow fibers 10 (and anything encapsulated within the hollow fibers 10) away from the surrounding environment.

Preferably, the outer layer is applied around the outer surfaces of the hollow fibers 10 such that additive materials added to the hollow fibers 10 can be sealed within the hollow fibers 10, and/or within their extra-cellular spaces. Further, the outer layer is preferably easily frangible and can be ruptured to allow additive materials to be released from the hollow fibers 10.

The outer layer can be any frangible material, such as a polymer, which is capable of both sealing the hollow fibers, as well as breaking, rupturing or perforating on demand. Preferably, the outer layer is made of sugar or pectin, which can also be provided to flavor filtrate, such as smoke filtrate, contacting the outer layer if desired. The outer layer is preferably used to immobilize additive materials within the hollow fibers 10, and thus preferably reduces dissipation of the additive material until the outer layer is broken, ruptured or perforated.

Preferably, the outer layer is a frangible thin film. By providing a frangible thin film, a difference in fluid pressure on either side of the outer layer and the hollow fiber walls (i.e., drawing on a cigarette with hollow fibers and the outer layer therein) can be sufficient to cause the outer layer to break to release the additive materials therefrom.

For example, in a cigarette, an outer layer can be designed to break when smoke is drawn through the walls of the hollow fibers, wherein the vacuum pressure of drawing the smoke can cause the outer layer to break. In other words, when a smoker can puff on a cigarette causing the outer layer to be broken by the smoke being drawn through the walls of the hollow fibers and additive materials can be released into the smoke as it passed through the walls of the hollow fibers.

The outer layer can be formed by any method capable of applying a film that is sufficiently thin to allow vacuum pressure to rupture the film. Preferably, the outer layer is applied by spraying a film forming material onto the outer surfaces of hollow fibers and allowing for the film forming material to solidify into a film to provide an outer layer.

For example, the forming of the outer layer may comprise spraying a layer of pectin or sugar on the outer surface of the hollow fibers.

### 4. Smoking Articles

In a preferred embodiment, the hollow fibers 10 are used in smoking articles, along with sorbents, such as microporous materials, to filter or remove gas phase constituents from cigarette smoke. Sorbents (i.e., microporous sorbents) such as an activated carbon and/or a zeolite sorbent can be used.

While any suitable material can be used as a sorbent, a preferred embodiment includes activated carbon. However, sorbents can hinder a cigarette designer's ability to add materials, such as volatile flavor components like menthol, as the sorbents can adsorb and/or absorb migrating volatile compounds during the time between cigarette manufacture and its being smoked.

Two problems occur when additive materials, such as volatile flavor components, are included in smoking articles with sorbents: first, the additive materials can migrate throughout the smoking article; and second, the additive materials can be adsorbed or absorbed by the sorbents. These problems have previously been addressed by using centrally located flavor elements in commonly assigned U.S. Patent Application No. 2003/0224918, as well as filters for a smoking article containing a flavored hollow fiber in U.S. Patent No. 4,971,078.

When additive materials are sorbed by sorbents, not only can additive materials be lost, but also the additive materials can also occupy active sites in the sorbent. If the additive materials occupy active sites in the sorbent, the ability of the sorbent to remove targeted gases or constituents from smoke can be compromised. However, hollow fibers 10 can be used to overcome this problem by containing and isolating the additive materials from the sorbent prior to smoking, and therefore avoiding interaction between the additive materials and the sorbent during storage.

In a cigarette filter, in addition to the hollow fibers 10 and the sorbent, a molecular sieve material can also be present. Preferably, the molecular sieve material can be present in monolithic or particle form sized at about 0.1 mm to 1 mm, and more preferably 0.3 mm to about 0.9 mm (e.g., 0.3 mm to 0.4 mm, 0.4 mm to 0.5 mm, 0.5 mm to 0.6 mm, 0.7 mm to 0.8 mm or 0.8 mm to 0.9 mm) to facilitate processing into cigarette filters so as to achieve a desirable filter pressure drop or RTD (resistance to draw).

Various filter constructions known in the art can be used, in which hollow fibers 10 can be incorporated. Exemplary filter structures that can be used include, but are not limited to, a mono filter, a dual filter, a triple filter, a single or multi cavity filter, a recessed filter, a free-flow filter, combinations thereof and the like. Filter elements are typically constructed from cellulose acetate tow or cellulose paper materials.

The length and pressure drop of the segments in a dual filter can be adjusted to provide optimal sorption, while maintaining acceptable draw resistance. Triple filters can include mouth and smoking material or tobacco side segments, and a middle segment comprising paper. Cavity filters include two spaced-apart filter plugs. The filters can also be ventilated and/or comprise additional sorbents (such as activated carbon), catalysts or other additives suitable for use in a cigarette filter.

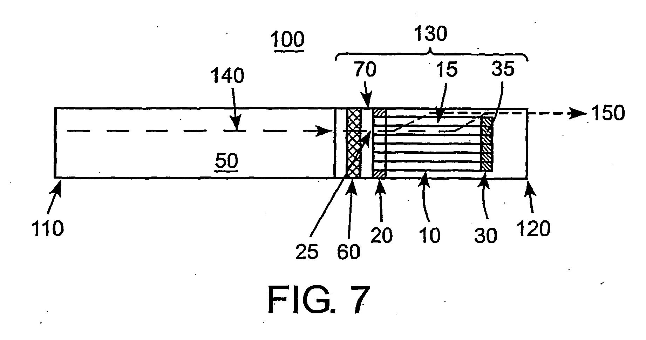

Additionally, in an exemplary embodiment, a cigarette 100 with a bundle of hollow fibers 10 in the filter 130 can also include a sorbent 60. For example, as illustrated in Figure 7, a cigarette 100 can be provided with a filter 130 which includes hollow fibers 10 with an additive material, such as a flavorant, therein and a sorbent 60 upstream (away from the smoker and toward the tobacco portion 50). As sorbents are typically effective for adsorbing or absorbing material added, such as a flavorant, placing the sorbent 60 upstream from the flavorant in the hollow fibers 10 can reduce the level of absorption or adsorption of the flavorant by the sorbent 60.

Preferably, the hollow fibers 10 can be located in a portion of the filter 130 downstream from the sorbent 60 with a section of filter material 70, such as cellulose acetate, between the two, as illustrated in Figure 7. Preferably, the hollow fibers 10 and the sorbent 60, if provided, would be placed in cavities within a filter assembly 40. However, both the hollow fibers 10 and the sorbent 60, if provided, can be placed anywhere within a filter 130 of a smoking article.

While a preferred filter includes a sorbent and hollow fibers 10, the hollow fibers 10 can also be used in smoking articles without a sorbent in the filter, as illustrated in Figures 1 and 4. Regardless of the type of article in which the hollow fibers 10 is incorporated, the hollow fibers 10 can be used to provide effective containment and delivery of materials, such as volatile flavors or other smoking related chemicals.

### 5. Additives

Hollow fibers can desirably be used to encapsulate additives in a smoking article, as mentioned above, wherein additives can be encapsulated within extra-cellular spaces of the hollow fibers. By such encapsulation, additives can both be protected from loss and can be mixed with entrainment air as air passes through the walls of the hollow fibers.

In order to immobilize or encapsulate additives within hollow fibers 10, hollow fibers 10 are preferably soaked in additives. Soaking allows the additives to be absorbed into extra-cellular spaces 35 of hollow fibers 10, where the additives can remain due to capillary forces, thus preventing dissipation of the additives.

The hollow fibers 10 can preferably be placed in a smoking article, more preferably a cigarette filter, where the hollow fibers 10 are aligned in a cigarette for airflow. For example, the long axes of the hollow fibers 10 can be aligned with the long axis of the cigarette for airflow purposes. Also, a downstream potting material 30 can be used to obstruct fluid flow through the downstream end of the hollow fibers 10.

Additionally, an outer layer can be formed on the hollow fibers 10 in order to prevent dissipation and to further encapsulate additive materials in extra-cellular spaces of the hollow fibers, as mentioned above.

The additives can be flavors, which can be selected from any number of known artificial and natural materials, such as, for example, peppermint, spearmint, wintergreen, menthol, cinnamon, chocolate, coffee, tobacco, vanillin, licorice, clove, anise, sandalwood, geranium, rose oil, vanilla, lemon oil, cassia, spearmint, fennel, ginger, ethylacetate, isoamylacetate, propylisobutyrate, isobutylbutyrate, ethylbutyrate, ethylvalerate, benzylformate, limonene, cymene, pinene, linalool, geraniol, citronellol, citral, peppermint oil, orange oil, coriander oil, borneol, fruit extract and the like. Illustrative of such tobacco flavorants are those described in U.S. Patent Nos. 3,580,259; 3,625,224; 3,722,516; 3,750,674; 3,879,425; 3,881,025; 3,884,247; 3,890,981; 3,903,900; 3,914,451; 3,915,175; 3,920,027; 3,924,644; 3,966,989; 4,318,417.

For example, cigarettes according to the invention may comprise an additive material comprising menthol.

The additives can also be chemicals, wherein the chemicals can be used to attract or repel aerosols, or react with smoke constituents to remove or chemically extract smoke constituents.

For example, chemicals which can be used to attract or repel aerosols include surfactants containing distinct hydrophobic (apolar) and hydrophilic (polar) regions. For example, polar surfactants can be used to attract or repel selected tobacco smoke constituents like polar tobacco constituents due to intrinsic attractive polarity properties. For example, by attracting tobacco smoke constituents, these tobacco smoke constituents can be trapped and held within the hollow fibers chemically (in addition to mechanically being selectively separated by pore size of the walls of the hollow fibers, as mentioned above).

As mentioned above, chemicals or chemical systems can also be used to react with smoke constituents to remove smoke constituents. For example, chemical systems such as aminopropylsilyl (APS), aminoethyl aminopropylsilyl (AEAPS) and aminoethylaminoethyl aminopropylsilyl (AEAEAPS) can be used. See commonly assigned U.S. Patent Nos. 6,595,218 and 6, 209, 547.

As mentioned above, chemicals can also be used to react with smoke constituents to extract smoke constituents. The term "chemical extractive smoking" is intended to mean providing predetermined tobacco smoke constituents to a smoker without any combustion of tobacco (i.e., smokeless smoking).

Chemical extractive smoking provides a chemical or reagent, such as water or alcohol, for interaction with tobacco in a tobacco product. By allowing the chemical or reagent to interact with tobacco, a tobacco enriched chemical or reagent can be formed, which in turn can be inhaled as a vapor or aerosol. For example, the chemical or reagent can be solvents, such as water or alcohol, such as ethyl alcohol. Preferably, the chemical extractive smoking occurs at lower than combustion temperatures; however heat can be utilized to promote vaporization (or volatilization) of the tobacco enriched chemical or reagent.

However, it is noted that heat can be used to increase the vapor and the solubility of the tobacco constituents for "smoking." By using heat, the tobacco enriched chemical or reagent can be heat vaporized and the mobilization of the tobacco properties within the vapor can potentially be increased.

As an exemplary embodiment of a chemical extractive smoking article, a cigarette can be made with hollow fibers including immobilized chemicals therein. When "smoked," the drawing action on one side of the hollow fibers 10 releases chemicals into the tobacco, whereupon the chemicals cause extractive release of a tobacco aerosol.

While the invention has been described in detail with reference to specific embodiments thereof, it will be apparent to those skilled in the art that various changes and modifications can be made, and equivalents employed, without departing from the scope of the appended claims.

## Claims

1. A cigarette (100), comprising:
a tobacco rod (50);
a filter (130) operative with the tobacco rod (50), wherein the filter (130) comprises a bundle of hollow fibers (10), wherein the lumens (15) of the hollow fibers (10) are aligned axially in parallel to one another; and
an additive material in extra-cellular spaces of the hollow fibers (10), wherein one end (25, 35) of at least one of the hollow fibers (10) is obstructed.

2. A cigarette (100) according to claim 1, wherein the filter (130) further comprises a plug (70) of fibrous filter material, wherein the plug (70) is located upstream and/or downstream from the hollow fibers (10) in the filter (130).

3. A cigarette (100) according to claim 1, wherein the hollow fibers (10) are located in a cavity of the filter (130).

4. A cigarette (100) according to claim 1, wherein the obstructed end (25, 35) of the at least one of the hollow fibers (10) comprises a first smoke impermeable material (20) located within the lumen (15) of the at least one of the hollow fibers (10), wherein the impermeable material (20) obstructs airflow through the obstructed end (25, 35) of the at least one of the hollow fibers (10).

5. A cigarette (100) according to claim 1, further comprising a second smoke impermeable material (20) surrounding an upstream (25) or a downstream (35) end of the bundle of hollow fibers (10), wherein the second smoke impermeable material (20) obstructs airflow around the bundle of hollow fibers (10) and directs airflow into lumens (15) of the bundle of hollow fibers (10).

6. A cigarette (100) according to claim 1, further comprising an outer layer on the hollow fibers (10), wherein the outer layer and the hollow fibers (10) comprise different materials.

7. A cigarette (100) according to claim 1, wherein the additive material comprises a flavorant, a reagent which chemically reacts with and selectively separates a gaseous component of a smoke stream (140), a surfactant, a solvent, or mixtures or combinations thereof.

8. A cigarette (100) according to claim 1, wherein the hollow fibers (10) comprise a bundle of fibers, and wherein the cigarette (100) further comprises a ring, wherein the ring surrounds the bundle of fibers.

9. A cigarette (100) according to claim 1, wherein the hollow fibers (10) comprises a bundle of fibers, and wherein the cigarette (100) further comprises an adhesive, wherein the adhesive bonds walls of the bundle of fibers to other walls of the bundle of fibers.

10. A cigarette (100) according to claim 1, wherein the filter (130) further comprises:
an outer layer covering an outer region of the hollow fibers (10); and
cellulose acetate, wherein the hollow fibers (10) and the outer layer are embedded within the cellulose acetate.

11. A method of manufacturing a cigarette filter (130), comprising:
preparing hollow fibers (10) with a smoke impermeable material (20) covering one end (25, 35) of at least one of the hollow fibers (10);
at least partially filling extra-cellular spaces within the hollow fibers (10) with an additive material; and
placing the hollow fibers (10) with the smoke impermeable material (20) and the additive material in a cigarette filter (130).

12. A method according to claim 11, further comprising forming an outer layer on an outer surface of the hollow fibers (10) before placing the hollow fibers (10) in the cigarette filter (130).

13. A cigarette filter (130) comprising a hollow fiber membrane, wherein the hollow fiber membrane comprises:
hollow fibers (10); and
a smoke impermeable material, wherein the smoke impermeable material obstructs a downstream end (35) of a lumen (15) of the hollow fiber (10).

14. A cigarette filter (130) according to claim 13, wherein the hollow fiber membrane comprises more than one hollow fiber (10) bundled and aligned in a direction parallel to one another and parallel to an axial direction of the cigarette filter (130), and/or wherein the hollow fiber (10) comprises a porous, permeable material.

## Patentansprüche

1. Zigarette (100), umfassend:
einen Tabakstab (50),
einen mit dem Tabakstab (50) funktionierenden Filter (130), wobei der Filter (130) ein Bündel Hohlfasern (10) umfasst, wobei die Lumen (15) der Hohlfasern (10) parallel zueinander axial aufeinander ausgerichtet sind, und
einen Zusatzstoff in extrazellulären Zwischenräumen der Hohlfasern (10), wobei ein Ende (25, 35) von wenigstens einer der Hohlfasern (10) verstopft ist.

2. Zigarette (100) nach Anspruch 1, bei der der Filter (130) ferner einen Einsatz (70) aus faserigem Filtermaterial umfasst, wobei der Einsatz (70) sich zuström- und/oder abströmseitig von den Hohlfasern (10) in dem Filter (130) befindet.

3. Zigarette (100) nach Anspruch 1, bei der sich die Hohlfasern (10) in einem Hohlraum des Filters (130) befinden.

4. Zigarette (100) nach Anspruch 1, bei der das verstopfte Ende (25, 35) der wenigstens einen der Hohlfasern (10) ein erstes rauchundurchlässiges Material (20) umfasst, das sich in dem Lumen (15) der wenigstens einen der Hohlfasern (10) befindet, wobei das undurchlässige Material (20) den Luftstrom durch das verstopfte Ende (25, 35) der wenigstens einen der Hohlfasern (10) blockiert.

5. Zigarette (100) nach Anspruch 1, ferner umfassend ein zweites rauchundurchlässiges Material (20), das ein zuströmseitiges (25) oder ein abströmseitiges (35) Ende des Bündels von Hohlfasern (10) umgibt, wobei das zweite rauchundurchlässige Material (20) den Luftstrom um das Bündel von Hohlfasern (10) blockiert und den Luftstrom in Lumen (15) des Bündels von Hohlfasern (10) lenkt.

6. Zigarette (100) nach Anspruch 1, ferner umfassend eine Außenschicht auf den Hohlfasern (10), wobei die Außenschicht und die Hohlfasern (10) verschiedene Materialien umfassen.

7. Zigarette (100) nach Anspruch 1, bei der der Zusatzstoff einen Aromastoff, ein Reagenz, das chemisch mit einer gasförmigen Komponente eines Rauchstroms (140) reagiert und sie selektiv separiert, ein Tensid, ein Lösungsmittel oder Gemische oder Kombinationen davon umfasst.

8. Zigarette (100) nach Anspruch 1, bei der die Hohlfasern (10) ein Faserbündel umfassen und wobei die Zigarette (100) ferner einen Ring aufweist, wobei der Ring das Faserbündel umgibt.

9. Zigarette (100) nach Anspruch 1, bei der die Hohlfasern (10) ein Faserbündel umfassen und bei der die Zigarette (100) ferner einen Klebstoff aufweist, wobei der Klebstoff Wände des Faserbündels an andere wände des Faserbündels bindet.

10. Zigarette (100) nach Anspruch 1, bei der der Filter (130) ferner Folgendes aufweist:
eine Außenschicht, die eine äußere Region der Hohlfasern (10) bedeckt, und
Celluloseacetat, wobei die Hohlfasern (10) und die Außenschicht in dem Celluloseacetat eingebettet sind.

11. Verfahren zum Herstellen eines Zigarettenfilters (130), umfassend:
Präparieren von Hohlfasern (10) mit einem rauchundurchlässigen Material (20), das ein Ende (25, 35) von wenigstens einer der Hohlfasern (10) bedeckt,
zumindest teilweises Füllen extrazellulärer Zwischenräume in den Hohlfasern (20) mit einem Zusatzstoff und
Einsetzen der Hohlfasern (10) mit dem rauchundurchlässigen Material (20) und dem Zusatzstoff in einen Zigarettenfilter (130).

12. Verfahren nach Anspruch 11, ferner umfassend das Bilden einer Außenschicht auf einer Außenfläche der Hohlfasern (10), bevor die Hohlfasern (10) in den Zigarettenfilter (130) eingesetzt werden.

13. Zigarettenfilter (130), umfassend eine Hohlfasermembran, wobei die Hohlfasermembran Folgendes umfasst:
Hohlfasern (10) und
ein rauchundurchlässiges Material, wobei das rauchundurchlässige Material ein abströmseitiges Ende (35) eines Lumens (15) der Hohlfaser (10) blockiert.

14. Zigarettenfilter (130) nach Anspruch 13, bei dem die Hohlfasermembran mehr als eine Hohlfaser (10) umfasst, die gebündelt und in einer zueinander parallelen und zu einer axialen Richtung des Zigarettenfilters (130) parallelen Richtung ausgerichtet sind, und/oder bei dem die Hohlfaser (10) ein poröses, durchlässiges Material umfasst.

## Revendications

1. Cigarette (100) comprenant:
un boudin de tabac (50);
un filtre (130) opérationnel avec le boudin de tabac (50), où le filtre (130) comprend un faisceau de fibres creuses (10), où les cavités centrales (15) des fibres creuses (10) sont alignées axialement parallèlement les unes aux autres; et
une matière additive dans les espaces extracellulaires des fibres creuses (10), où une extrémité (25, 35) d'au moins l'une des fibres creuses (10) est obstruée.

2. Cigarette (100) selon la revendication 1, dans laquelle le filtre (130) comprend en outre un bouchon (70) en matière filtre fibreuse, où le bouchon (70) est situé en amont et/ou en aval des fibres creuses (10) dans le filtre (130).

3. Cigarette (100) selon la revendication 1, dans laquelle les fibres creuses (10) sont situées dans une cavité du filtre (130).

4. Cigarette (100) selon la revendication 1, dans laquelle l'extrémité obstruée (25, 35) d'au moins l'une des fibres creuses (10) comprend une première matière imperméable à la fumée (20) située dans la cavité centrale (15) d'au moins l'une des fibres creuses (10), où la matière imperméable (20) obstrue l'écoulement d'air à travers l'extrémité obstruée (25, 35) de la au moins une des fibres creuses (10).

5. Cigarette (100) selon la revendication 1, comprenant en outre une deuxième matière imperméable à la fumée (20) entourant une extrémité amont (25) ou aval (35) du faisceau de fibres creuses (10), où la deuxième matière imperméable à la fumée (20) obstrue l'écoulement d'air autour du faisceau de fibres creuses (10) et dirige l'écoulement d'air dans les cavités centrales (15) du faisceau de fibres creuses (10).

6. Cigarette (100) selon la revendication 1, comprenant en outre une couche extérieure sur les fibres creuses (10), où la couche extérieure et les fibres creuses (10) comprennent des matières différentes.

7. Cigarette (100) selon la revendication 1, dans laquelle la matière additive comprend un arôme, un réactif qui réagit chimiquement avec et sépare sélectivement un composant gazeux d'un courant de fumée (140), un tensioactif, un solvant ou des mélanges ou combinaisons des mêmes.

8. Cigarette (100) selon la revendication 1, dans laquelle les fibres creuses (10) comprennent un faisceau de fibres et où la cigarette (100) comprend en outre une bague, où la bague entoure le faisceau de fibres.

9. Cigarette (100) selon la revendication 1, dans laquelle les fibres creuses (10) comprennent un faisceau de fibres et où la cigarette (100) comprend en outre un adhésif, où l'adhésif colle des parois du faisceau de fibres à d'autres parois du faisceau de fibres.

10. Cigarette (100) selon la revendication 1, dans laquelle le filtre (130) comprend en outre:
une couche extérieure recouvrant une région extérieure des fibres creuses (10); et
de l'acétate de cellulose, où les fibres creuses (10) et la couche extérieure sont enfouies dans l'acétate de cellulose.

11. Procédé de fabrication d'un filtre à cigarette (130), comprenant:
préparer des fibres creuses (10) avec une matière imperméable à la fumée (20) couvrant une extrémité (25, 35) d'au moins l'une des fibres creuses (10);
remplir partiellement au moins des espaces extracellulaires dans les fibres creuses (10) avec une matière additive; et
mettre les fibres creuses (10) avec la matière imperméable à la fumée (20) et la matière additive dans un filtre à cigarette (130).

12. Procédé selon la revendication 11, comprenant en outre former une couche extérieure sur une surface extérieure des fibres creuses (10) avant de mettre les fibres creuses (10) dans le filtre à cigarette (130).

13. Filtre à cigarette (130) comprenant une membrane à fibres creuses, dans lequel la membrane à fibres creuses comprend:
des fibres creuses (10); et
une matière imperméable à la fumée, où la matière imperméable à la fumée obstrue une extrémité aval (35) d'une cavité centrale (15) de la fibre creuse (10).

14. Filtre à cigarette (130) selon la revendication 13, dans lequel la membrane à fibres creuses comprend plus d'une fibre creuse (10) mise en faisceau et alignée dans une direction parallèle l'une à l'autre et parallèle à une direction axiale du filtre à cigarette (130), et/ou dans lequel la fibre creuse (10) comprend une matière perméable, poreuse.
